# EUROPEAN PATENT SPECIFICATION

(11) **EP 0 548 999 B1**
(45) Date of publication and mention of the grant of the patent: **08.05.1996**
(21) Application number: 92200548.3
(22) Date of filing: 26.02.1992
(51) Int. Cl.: B65B 1/06, B65G 69/16

(54) **Method for filling particulate material into tubes**
Verfahren zum Befüllen von Tuben mit körnigem Material
Procédé pour le remplissage de matériau granulaire dans des tubes

(30) Priority: 20.12.1991 NO 915044
(43) Date of publication of application: 30.06.1993
(73) Proprietor: NORSK HYDRO a.s., N-0257 Oslo 2 (NO)
(72) Inventor: Ryntveit, Gunne, N-3900 Porsgrunn (NO); Bayer, Kjell Roger, N-3748 Siljan (NO)
(74) Representative: Bleukx, L.L.M.

(56) References cited:
- US-A- 3 608 751

## Description

The present invention relates to a method for filling particulate material into a tube. The method relates more particularly to filling a catalyst into a tube and then usually a whole series of vertical tubes, for example in connection with production of ammonia.

The main problem with filling particles into a tube is that voids easily form. This happens especially with particles which easily form bridges in the tube. To attain even filling, the tube can be vibrated, e.g. by tapping or striking the upper part of the tube. However, this is laborious and delays the filling operation. Furthermore, the tube is exposed to extra mechanical stress.

When filling catalyst into the tubes, there is a special problem with unevenness because uneven filling and voids cause uneven temperature distribution over the tube. This creates temperature and mechanical stress in the tube and reduces its lifetime.

A known way to reduce the above described problem is to first fill particles into long sock, for example of soft plastic. The particles or catalysts can also be delivered from the manufacturer in such socks. When filling the tubes, the sock with particles is fastened on a line and lowered towards the bottom of each tube. By jerking the line, the sock opens below and the particles flow into the tube. Usually a large number of such socks is required to fill one catalyst tube. With this method, it is usual to tap the tubes to improve the degree of filling.

There are several disadvantages with this method. Particularly, if the sock contains voids, then one easily gets corresponding voids in the tube when the sock is emptied. Even and dense filling of the tube with particles is consequently difficult to achieve with this method. Different densities in the tubes cause variation in the pressure drop over the tubes. This results in distortions of the gas distribution in a multitube reactor. The poor reproducibility with the filling means that the tubes must be exposed to extra tapping to secure reasonably even gas distribution over the tubes. In addition, the method is laborious. One is fettered to one packaging form and must often pay to get the particles filled into the socks. Systematic errors may also arise because of operator-dependent errors both with filling the socks and with filling the tubes.

A special way to attain good and even packing of particles in tubing is to fill it with water and then pour in particles. However, this method requires that the water afterwards is completely removed. This removal and subsequent drying takes a long time and to this must be added that not all types of particles/catalysts can endure exposure to water.

A method for filling a tube with a catalyst by adding it to the upper part of the tube by means of a transporter comprising a slowly rotating arrangement is known from patent application RD-253040-A. The catalyst is transported from a container through a duct in which there is a rod with oblique/transverse propeller wings or brushes. The catalyst particles are then transported to the catalyst tube's upper end and fall smoothly into it.

In order to get even filling of the tube, the particles must be added slowly. Further, the particles, especially during the first part of the filling, have a long drop and may thereby be crushed during the fall. Consequently, the result will be uneven packing of particles over the vertical length of the tube. The filling time with this method will also be long.

US-A-3,608,751 discloses a device for facilitating dry loading of a particulate catalyst into vertical tubes. The device comprises a line such as Manila rope with a series of damper means, in the form of rigid blades, arranged transversally to the line.

The object of the present invention is to arrive at a method which does not have the disadvantages of the known methods. More particularly, a quick, gentle, and even filling of particles into the tubes was desired.

In order to get a quick filling of the tubes, the particles were emptied directly down into the tubes, but to avoid crushing of the particles various approaches were tried to soften the fall. Rods with transverse damper means were lowered down into the tube and particles were poured down the tube over them. This seemed to work well provided that the particles fell evenly downwards from damper means to damper means. By pulling the rod upwardly during the filling, a relatively even filling was attained. However, in most cases, a rigid rod was awkward and space-consuming to use. Consequently flexible means, in the following defined to be a line comprising an articulated rod, a wire, chain or the like with a plurality of damper means shapeable in different ways, but their radial extension had to be smaller than the radius of the tube. The type and shape of the damper means and line could be adapted in particular cases to the actual type of particles and the tubular diameter. Somewhat flexible damper means seemed to be advantageous to use. An advantageous embodiment was found to be bristles of spring steel or relatively stiff springs twisted into the wire or fastened in some other manner to the line/chain with the damper means. It also appeared that with such a line with damper means, bridge formation was avoided, even with particulate material known for easily forming bridges during filling.

More complete testing was begun. A funnel was set up on each tube and a line with a series of damper means was conveyed down in the tube. Then the particles were poured down into the tube. A very quick, even and reproducible filling was attained, particularly if the line was jerked a little during the filling while simultaneously being lifted up gradually as the tube filled.

The special features of the invention are as defined in the attached patent claims.

The invention will now be explained in detail with reference to the drawings and the examplified embodiments.
- Fig. 1: shows a tube filled in a conventional manner.
- Fig. 2: shows a tube filled in accordance with the invention.
- Fig. 3: shows a detailed embodiment of the means used during filling in accordance with the invention.

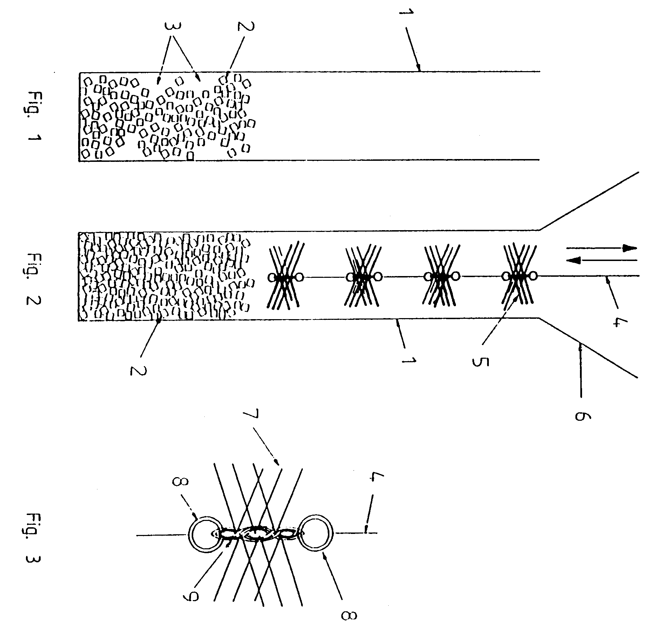

Fig. 1 shows a tube 1, e.g. a catalyst tube. Particles 2 are filled in the tube 1, and as shown in the drawing, there is uneven filling since voids 3 have come into being.

Fig. 2 shows how a tube 1 can be filled by the inventive method and which accessories are used. A line 4, wire, chain or the like, is provided with substantially transverse damper means 5. Here, these are shown as brushes. The line 4 can be moved, primarily vertically, and is pulled gradually up out of the tube as it fills. The particles pour down into the tube 1 through a funnel 6 removed after filling is completed. The particles can of course be added in other ways, e.g. by means of the transporter described in the above-specified patent application.

Fig. 3 shows the damper means 5 in detail and how the substantially transverse springs are twisted into a string 9 fastened to the line 4 by rings 8. The distance between the damper means 5 is usually substantially equal, but it can also vary. The damper means' 5 shaping, as to length, stiffness, number of individual brushes etc, can be adapted to the material to be filled into the tube 1.

### Example 1

A series of tests were performed by filling particles into a tube in accordance with a conventional method and the inventive method. During the testing, a 4 meter long transparent tube with an inner diameter of 100 mm was used. Catalyst particles of 17 mm x 17 mm x 6 mm were used.

The tube was first filled by lowering socks with particles down into the tube and then pulling the socks up so that they emptied. In order to fill a tube, four of these standard socks were consumed. There was observed some crushing of particles and quite uneven filling of the tube, with a number of empty spaces and some bridge formation in the tube. It appeared that the particles from the socks were transferred so directly down into the tube that the empty spaces in the sock could substantially be rediscovered in the tube.

Average filling time for 10 tests was : 153 seconds.
Average bulk density of the catalyst in the tube was : 1.00 kg/liter.
Reproducibility, expressed as standard deviation of bulk density, was: 0.02.

A series of corresponding tests and the same type of particles were performed in accordance with the invention and as illustrated in Figs. 2 and 3. The distance between the damper means was about 50 cm. No crushing of particles was observed. There was a very even distribution of particles in the tube without any empty space.

Average filling time for 10 tests was : 105 seconds.
Average bulk density was : 1.11 kg/liter.
Reproduciblity, standard deviation in bulk density, was : 0.01.

A series of further tests with other types of particles were performed. These tests were performed in accordance with the invention and showed that also for these particles quick filling of the tubes was attained, and that they were evenly filled without signs of bridge formation or empty spaces.

With the present invention, a novel and more reproducible filling method, far quicker than those known, has been attained. The method is gentle to particles such that their crushing during the filling operation is avoided. An even filling of the tube is also obtained, and thus one result has been avoidance of uneven temperature distribution when the tube filled with catalyst is in operation.

Further, an even density of particles in the tubes is attained without exposing them to tapping/vibration which is both time-consuming and damaging to the tubes. Consequently, time is saved both during the filling and since the tubes do not have to be tapped as is usual with known methods.

The method is simple and to a very small degree dependent upon whoever is the operator during the filling process. In addition, one avoids the errors connected with filling of particles in socks. A substantial degree of freedom regarding packaging and the form of transport for the particles is also obtained.

## Claims

1. A method for filling particulate material into vertical tubes, said material being conveyed down into the tube along a line with a series of damper means arranged substantially transversely to the line and having a radial extension less than the tube's inner radius, and that the line is pulled up gradually as the tube is filled with particles,
**characterized in that**
the damper means are in the form of brushes which are so flexible that they give gradually when the particles fall down on them.

2. A method according to,
**characterized in that**
a wire is used as the line, to which is fastened a series of substantially equidistant transversely extending brushes, preferably consisting of springs.

## Patentansprüche

1. Verfahren zum Füllen von aus Partikeln bestehendem Material in vertikale Rohre, wobei das besagte Material in das Rohr hinab befördert wird, entlang einer Leine mit einer Reihe von Dämpfungsmitteln, welche im wesentlichen quer zu der Leine angeordnet sind und eine radiale Ausdehnung aufweisen die geringer ist als der innere Halbmesser des Rohres, und wobei die Leine stufenweise nach oben gezogen wird in dem Maße wie das Rohr mit Partikeln gefüllt wird, dadurch gekennzeichnet, daß die Dämpfungsmittel in der Form von Bürsten vorliegen, welche so biegsam sind, daß sie stufenweise nachgeben wenn die Partikeln auf sie fallen.

2. Verfahren gemäß Anspruch 1, dadurch gekennzeichnet, daß man als Leine einen Draht benutzt, an den eine Reihe von Bürsten befestigt wird, welche im wesentlichen in gleichen Abständen angeordnet sind und sich in Querrichtung erstrecken, wobei dieselben vorzugsweise aus Federn bestehen.

## Revendications

1. Procédé de remplissage de tubes verticaux par un matériau particulaire, ledit matériau étant acheminé dans le tube de haut en bas le long d'une ligne comportant une série de moyens d'amortissement agencés de manière sensiblement transversale à la ligne et ayant une extension radiale inférieure au rayon interne du tube, et la ligne étant retirée vers le haut graduellement au fur et à mesure que le tube est rempli de particules, caractérisé en ce que les moyens d'amortissement se présentent sous la forme de brosses qui sont assez flexibles pour qu'elles opèrent graduellement lorsque les particules tombent sur elles.

2. Procédé selon la revendication 1, caractérisé en ce qu'on utilise comme ligne un fil métallique auquel sont fixées une série de brosses s'étendant transversalement et sensiblement équidistantes, constituées de préférence de ressorts.
